(19) Europäisches Patentamt / European Patent Office / Office européen des brevets

(11) **EP 3 319 749 B1**

(12) **FASCICULE DE BREVET EUROPEEN**

(45) Date de publication et mention de la délivrance du brevet:
**11.09.2019 Bulletin 2019/37**

(21) Numéro de dépôt: **16736167.4**

(22) Date de dépôt: **07.07.2016**

(51) Int Cl.:
**B23B 47/34** *(2006.01)*

(86) Numéro de dépôt international:
**PCT/EP2016/066119**

(87) Numéro de publication internationale:
**WO 2017/009168 (19.01.2017 Gazette 2017/03)**

(54) **SYSTÈME VIBRATOIRE À PLATEAU OSCILLANT**

VIBRATIONSSYSTEM MIT SCHWINGENDER PLATTE

VIBRATORY SYSTEM WITH AN OSCILLATING PLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2015 FR 1556620**

(43) Date de publication de la demande:
**16.05.2018 Bulletin 2018/20**

(73) Titulaires:
• **Université de Bordeaux**
  **33000 Bordeaux (FR)**
• **Institut Polytechnique de Bordeaux**
  **33402 Talence Cedex (FR)**
• **Centre National de la Recherche Scientifique CNRS**
  **75016 Paris (FR)**

(72) Inventeur: **JALLAGEAS, Jérémy**
**40600 Biscarosse (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**WO-A1-90/05863     US-A- 2 458 929
US-A- 5 562 560**

**Description**

La présente invention concerne une cinématique permettant de créer un mouvement alternatif axial ou de va-et-vient ou vibratoire.

La technique du perçage vibratoire a été proposée dans les années 50. Le principe de la technique consiste à ajouter un mouvement oscillatoire axial appelé également mouvement vibratoire, au mouvement de coupe de l'outil. Le mouvement oscillant ou vibratoire se définit par deux paramètres : l'amplitude et la fréquence des oscillations.

Habituellement appliquée aux opérations d'usinage qui s'effectuent en coupe continue (incluant perçage, forage, alésage, tournage, décolletage, etc...) cette technique permet de faire varier cycliquement la prise de passe de l'outil. La prise de passe est le paramètre du procédé permettant de régler l'épaisseur du copeau.

Lors d'un usinage en coupe continue, la section du copeau reste constante au cours du temps. En revanche, lors d'un perçage vibratoire, l'épaisseur du copeau à l'instant $t_1$ différera de celle à l'instant $t_2$. Par ailleurs, on constate que cette épaisseur peut être amenée à s'annuler ponctuellement, entraînant l'interruption de la formation du ruban de copeau. Le copeau ne sera alors plus continu mais « fragmenté ».

La distinction entre la technique du perçage vibratoire et celle utilisant des cycles brise-copeaux (ex : cycles de débourrage) réside dans la fréquence du mouvement axial de va-et-vient : celui-ci sera, dans le cas des cycles brise-copeaux, systématiquement supérieure à la fréquence de rotation de l'outil. Le copeau n'aura donc pas une morphologie fragmentée mais celle-ci sera plutôt courte, voire mi-longue.

Le perçage en mode vibratoire est employé dans des opérations de perçages ou forages profonds, pour limiter les risques de bourrage de copeaux dans les goujures de l'outil. En plus de l'amélioration de l'évacuation des copeaux, d'autres utilisations, plus récentes, utilisent la technique vibratoire pour réduire réchauffement de l'outil.

On connaît l'existence des dispositifs de perçage vibratoire par les publications FR 2 907 695, DE 10 2005 002 462, FR 2 902 848 et WO 2011/061 678 intégrés par référence. Les systèmes mécaniques proposés utilisent, de façons diverses, la technologie des cames.

Dans la demande FR 2 907 695, les oscillations sont générées par des cames sans organes de roulement. Il en résulte un frottement au niveau de la came, qui génère un échauffement et du bruit. En outre, la fréquence vibratoire optimale pour la fragmentation correcte du copeau n'est pas toujours obtenue du fait que cette fréquence est un multiple entier de la vitesse de rotation du pignon d'avance par rapport à la broche ou par rapport au bâti.

Dans le brevet DE 10 2005 002 462, un ressort exerce une force de rappel sur un roulement comportant une surface ondulée, dans une direction d'avance du foret, afin de produire des vibrations axiales. En cas de pression axiale élevée du foret, les organes de roulement peuvent cesser de rouler sur la surface ondulée, et le foret cesse d'osciller. Pour éviter cet inconvénient, le ressort doit présenter une raideur importante, ce qui peut amener à surdimensionner le roulement. Il en résulte un coût important.

Enfin la demande de brevet WO 2011/061678 apporte une solution technique améliorée des systèmes précédemment cités. Tout d'abord, le système vibratoire proposé dispose d'organes de roulement permettant de limiter les frottements. Le nombre de périodes vibratoires par révolution de la broche est un nombre non entier, défini par la géométrie de la came et constant pendant la période. L'avantage d'un nombre non entier permet d'éviter une trajectoire parallèle des arêtes de coupe lors du perçage et accroît l'efficacité de fragmentation des copeaux.

Cependant, l'utilisation de la technologie vibratoire à came ne permet pas d'obtenir un mouvement oscillatoire optimal. En effet, les possibilités de réglage de la fréquence et de l'amplitude sont limitées par la forme de la came et par la précision de son usinage. Ceci implique notamment l'utilisation d'une amplitude élevée lors du perçage à faible avance et ainsi entraîner une sollicitation mécanique importante du système usinant. Par ailleurs, les coûts liés à l'usinage puis à l'usure et aux casses des cames ne sont pas négligeables.

Par exemple, dans le cas du perçage de multi-matériaux, fréquemment rencontré dans l'industrie aéronautique, on est amené à percer des matériaux possédant des propriétés d'usinage différentes. Il convient alors que les paramètres vibratoires (fréquence, amplitude des oscillations) puissent être réglables.

Pour des raisons d'accessibilité, le perçage aéronautique se fait fréquemment par l'intermédiaire d'unités de perçage portatives. La technologie vibratoire doit donc pouvoir s'intégrer dans ces systèmes de perçage compacts.

Une unité de perçage est un dispositif de commande de l'outil. La demande FR 2 881 366 décrit un dispositif de perçage comportant deux trains d'engrenages et intégré par référence. Le premier train est composé d'un pignon moteur et d'un pignon broche, il permet de donner le mouvement de rotation à la broche par l'intermédiaire d'une liaison glissière. Le deuxième train est composé d'un pignon craboteur et d'un pignon d'avance. Ce dernier est en liaison hélicoïdale avec la broche.

Lors de la phase de perçage le pignon craboteur s'accouple avec le pignon moteur qui l'entraîne en rotation. Une fois en mouvement, le pignon craboteur va entraîner en rotation le pignon d'avance. Le différentiel de vitesse des pignons broche et d'avance va créer le mouvement d'avance de la broche. Lorsque la phase de remontée de la broche débute, le pignon craboteur se désolidarise du pignon moteur pour s'encastrer avec le bâti du dispositif de perçage. Les pignons craboteurs et d'avance s'arrêtent donc de tourner. La broche en continuant à tourner va, grâce à la liaison hélicoïdale figée, se déplacer dans le sens opposé et donc remonter.

L'invention WO2014125182 propose une cinématique alternative à la précédente, en désaxant le pignon craboteur et le pignon moteur. Du fait que les deux pignons soient désaxés, la distance entre un point J appartenant au pignon craboteur et le centre de rotation du pignon moteur évoluera constamment. Ceci implique que la position angulaire du pignon craboteur oscillera par rapport à celle du pignon moteur. La fluctuation de la vitesse au niveau du pignon craboteur se traduira ensuite au niveau de la broche par un mouvement d'oscillation.

Le document US 2,458,929 A divulgue un système oscillant selon le préambule de la revendication 1.

L'objet de l'invention est de proposer un système oscillant qui combine toutes les qualités des systèmes vibratoires connus : un large choix de réglages, un nombre d'oscillations par tour non-entier, une robustesse, une faible usure, une taille du système réduite, etc...

Le système oscillant selon l'invention comprend les caractéristiques de la revendication 1 : une broche, au moins un moteur d'entraînement pour entraîner la broche selon un axe de rotation, un premier plateau et un deuxième plateau, ledit premier plateau coopérant avec le deuxième plateau, le premier plateau étant incliné par rapport à l'axe de rotation, le deuxième plateau étant rotulé sur un deuxième axe décalé par rapport à l'axe de rotation créant une amplitude d'oscillations dans la broche, au moins un des deux plateaux étant entraîné par le moteur d'entraînement et les deux plateaux tournant à des vitesses différentes. La combinaison de l'inclinaison du premier plateau avec l'excentration du centre de rotation du deuxième plateau et la différence de vitesse entre les deux plateaux permet de créer une oscillation de la broche lors de sa rotation. Grace à la liaison rotulée du deuxième plateau, les deux plateaux peuvent rester parallèles. De préférence le premier plateau est solidaire de la broche. Le deuxième plateau tourne à une vitesse différente du premier plateau, voire en sens inverse.

Avantageusement, les deux plateaux sont en contact par l'intermédiaire de billes. L'utilisation de billes permet de garder un contact uniforme entre les deux plateaux et de limiter les frottements. Les billes pourront être disposées sur le premier ou le deuxième plateau.

Avantageusement, l'amplitude des oscillations est réglable. En jouant sur les différents paramètres d'inclinaison et d'excentration d'un ou deux plateaux, il est possible de faire varier l'amplitude des oscillations de la broche.

Selon une première disposition préférentielle, l'inclinaison du premier plateau est réglable. Ce dernier peut, par exemple, être relié à l'axe de rotation par une liaison de type rotule à doigt afin de bloquer sa rotation selon l'axe de la broche. L'inclinaison du plateau peut être faite grâce à une vis sans fin qui coopère avec le premier plateau. Le dispositif de réglage peut, par exemple, être solidaire du premier plateau et tourner avec lui.

Selon une deuxième disposition préférentielle, le décalage du deuxième axe par rapport à l'axe de rotation est réglable. L'excentration du deuxième plateau par rapport au premier plateau pourra par exemple être modifiée en changeant le support rotulé dans lequel est placé le deuxième plateau.

Avantageusement, le nombre d'oscillations par tour est réglable. En jouant sur la différence de vitesse entre les deux plateaux 2 et 3, il est possible de faire varier la fréquence des oscillations de la broche.

Selon une première variante préférentielle, les plateaux sont entraînés par des moteurs différents. Il sera ainsi possible de les faire tourner à des vitesses différentes voire en sens inverse.

Selon une deuxième variante préférentielle, les plateaux sont entraînés par un train d'engrenages. Cela pourra être un train épicycloïdal.

D'autres avantages pourront encore apparaître à l'homme du métier à la lecture des exemples ci-dessous, illustrés par les figures annexées, donnés à titre d'exemple:

- La figure 1 représente une vue schématique du système vibratoire selon l'invention,
- La figure 2 est une perspective du système vibratoire,
- La figure 3 est une coupe de la figure 3.

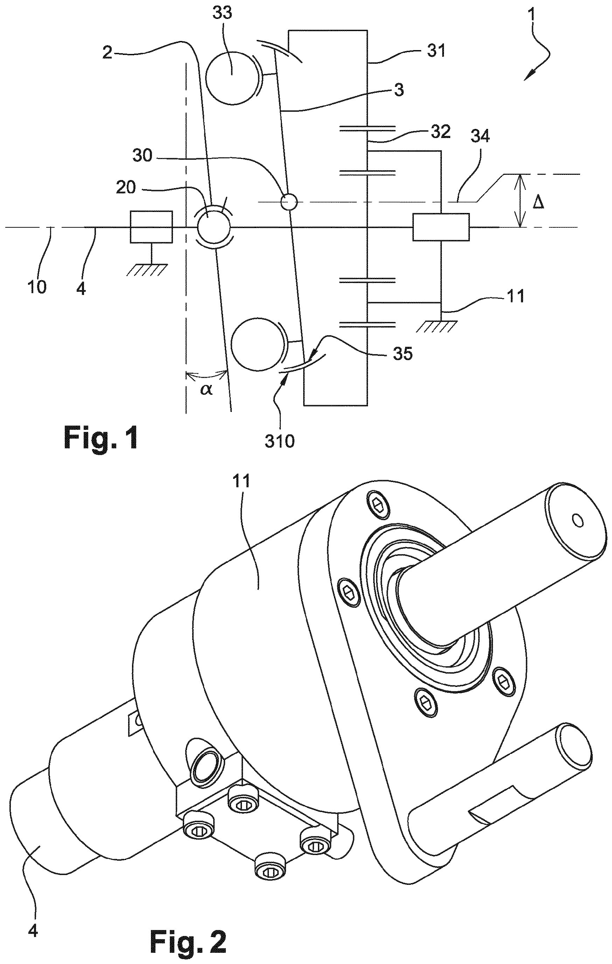

Le schéma du système 1 selon l'invention illustré figure 1 comprend:

- un premier plateau 2 placé sur un axe de rotation 10 par une liaison rotule à doigt 20,
- une broche 4 fixée sur l'axe 10,
- un deuxième plateau 3 placé en vis-à-vis du premier plateau 2 et rotulé autour d'un centre 30 de rotation dans un support de rotule 31. Le deuxième plateau 3 présente de préférence des bords arrondis 35 qui glissent librement dans un rebord arrondi 310 du support de rotule 31.

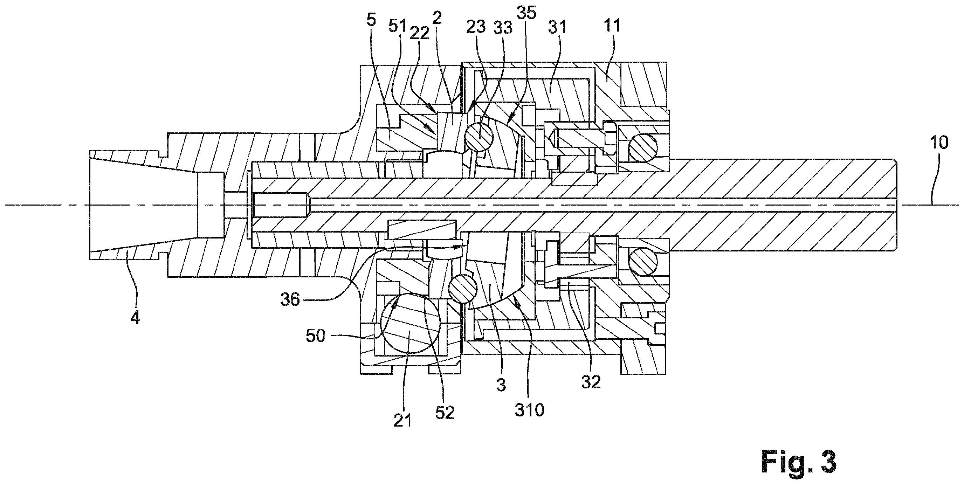

Le support de rotule 31 tourne autour de l'axe 10 et est ici entraîné par la couronne du train épicycloïdal 32. On voit sur la figure 3 que le porte satellite 11 du train épicycloïdal est fixe. Le rapport de vitesse entre le planétaire d'entrée et la couronne de sortie est, dans le cas présent, égal à -0.5.

Le deuxième plateau 3 comprend des billes 33 qui constituent un roulement et restent en contact avec le premier plateau 2.

Le centre 30 de rotation est placé sur un axe 34 décalé par rapport à l'axe de rotation 10 d'une distance Δ.

Le premier plateau 2 a une inclinaison α réglable par une vis sans fin 21 qui coopère avec des dents 50 disposées dans un bord périphérique 52 d'une roue de réglage 5. Cette dernière possède une de ses deux faces inclinée 51 par rapport à l'axe 10 et formant un angle égal à la moitié de α max. Le plateau 2 a deux faces 22 et 23 faisant entre elles un angle égal à la moitié de α max. La liaison rotule à doigt du plateau 2 avec l'axe 10, permet de garder les deux faces inclinées 22, 51 parallèles. Ainsi, la face 23 est elle-même inclinée par rapport à l'axe 10 selon un angle égal à a, fonction des deux inclinaisons et de la position angulaire de la roue 5 par rapport au plateau 2, pouvant aller jusqu'à α max.

Nous allons maintenant décrire le fonctionnement du système vibratoire.

La broche 4 est entraînée en rotation par un moteur d'entraînement (non représenté) de la machine dans laquelle est intégré le système vibratoire 1. En tournant la roue de réglage 5, par l'intermédiaire de la vis sans fin 21, il est possible de disposer les deux pentes inclinées 51, 22 en quinconce soit avec des inclinaisons opposées. Ainsi, la face 23 du plateau 2 devient perpendiculaire à l'axe 10 (α=0). En dehors de cette disposition en quinconce de 51 et 22, l'angle α est non nul. Il est ainsi possible de régler l'inclinaison du premier plateau 2 et le maintien en position dudit plateau 2. En cours de fonctionnement, le premier plateau 2 oscillant est considéré en liaison complète avec la broche 4. Le premier plateau 2 va alors animer la broche 4 d'une vibration axiale.

Le deuxième plateau 3 comporte des billes 33 logées sur sa face 36 en vis-à-vis du premier plateau 2 pour transmettre les efforts au bâti et garantir un appui plan avec le plateau oscillant 2 quelle que soit l'inclinaison de ce dernier. Le deuxième plateau 3 se loge dans le support rotulé 31. Dans cette configuration, le support rotulé 31 est en liaison pivot avec le porte satellite 11 ou un bâti 11.

L'intérêt de cette conception est d'avoir désaxé le centre de rotulage du deuxième plateau 3. Du fait de ce désaxage, la position axiale du centre de la rotule 30 va être sensible à l'inclinaison du plateau oscillant 2. L'amplitude des vibrations résultante est donnée par la relation suivante :

$$Amp_{vib}(mm) = 2.\Delta.\tan(\alpha)$$

L'amplitude des oscillations peut être ajustée en changeant l'inclinaison du plateau 2 oscillant ou la valeur du désaxage du deuxième plateau 3.

La fréquence de vibration résulte du différentiel de vitesse entre le plateau oscillant 2 et le deuxième plateau 3. Lorsque ce dernier est fixe par rapport au bâti 11, le nombre d'oscillations par tour de broche est égal à 1. Par l'intervention d'un train épicycloïdal, le deuxième plateau 3 peut tourner à une vitesse différente de celle de la broche 4. Il est ainsi possible de moduler la fréquence des oscillations, voire de les annuler. Le nombre d'oscillations par tour est donné par la relation suivante :

$$Fq_{vib}(osc./tr) = \frac{\left| Fq_{rot\,broche} - Fq_{rot\,support\,butée} \right|}{Fq_{rot\,broche}}$$

Un ressort de rappel (non représenté) peut être ajouté au système pour maintenir le contact entre les différents organes en l'absence d'effort au niveau de la broche.

Ce système présente les avantages suivants : simplicité du système vibratoire, un encombrement réduit et la possibilité de moduler les amplitudes et la fréquence des oscillations sans démonter le système.

**Revendications**

1. Système oscillant (1) comprenant une broche (4), au moins un moteur d'entraînement pour entraîner la broche (4) selon un axe de rotation (10), un premier plateau (2) et un deuxième plateau (3), ledit premier plateau (2) coopérant avec le deuxième plateau (3), le premier plateau (2) étant incliné par rapport à l'axe de rotation (10), et au moins un des deux plateaux (2, 3) étant entraîné par le moteur d'entraînement, **caractérisé en ce que** le deuxième plateau (3) est rotulé sur un deuxième axe (34) décalé par rapport à l'axe de rotation (10) créant une amplitude d'oscillations dans la broche (4), et que les deux plateaux (2, 3) tournent à des vitesses différentes.

2. Système oscillant (1) selon la revendication 1 **caractérisé en ce que** les deux plateaux (2, 3) sont en contact par l'intermédiaire de billes (33).

**3.** Système oscillant (1) selon une des revendications précédentes **caractérisé en ce que** l'amplitude des oscillations est réglable.

**4.** Système oscillant (1) selon la revendication précédente **caractérisé en ce que** l'inclinaison du premier plateau (2) est réglable.

**5.** Système oscillant (1) selon une des revendications 3 ou 4, **caractérisé en ce que** le décalage du deuxième axe (34) par rapport à l'axe de rotation (10) est réglable.

**6.** Système oscillant (1) selon une des revendications précédentes **caractérisé en ce que** le nombre d'oscillations par tour est réglable.

**7.** Système oscillant (1) selon la revendication précédente **caractérisé en ce que** les plateaux (2, 3) sont entraînés par des moteurs différents.

**8.** Système oscillant (1) selon une des revendications 6 ou 7 **caractérisé en ce que** les plateaux (2, 3) sont entraînés par un train d'engrenages.

**Patentansprüche**

**1.** Schwingsystem (1), welches eine Spindel (4), wenigstens einen Antriebsmotor zum Antreiben der Spindel (4) zur Drehung um eine Drehachse (10), eine erste Platte (2) und eine zweite Platte (3) umfasst, wobei die erste Platte (2) mit der zweiten Platte (3) zusammenwirkt, die erste Platte (2) bezüglich der Drehachse (10) geneigt ist und wenigstens eine der zwei Platten (2, 3) von dem Antriebsmotor angetrieben wird,
**dadurch gekennzeichnet, dass** die zweite Platte (3) auf einer zur Drehachse (10) versetzten zweiten Achse (34) kugelgelenkig gelagert ist, wodurch eine Schwingungsamplitude in der Spindel (4) erzeugt wird, und dass die zwei Platten (2, 3) mit unterschiedlichen Geschwindigkeiten rotieren.

**2.** Schwingsystem (1) nach Anspruch 1, **dadurch gekennzeichnet, dass** die zwei Platten (2, 3) über Kugeln (33) in Kontakt stehen.

**3.** Schwingsystem (1) nach einem der vorhergehenden Ansprüche, **dadurch gekennzeichnet, dass** die Amplitude der Schwingungen einstellbar ist.

**4.** Schwingsystem (1) nach dem vorhergehenden Anspruch, **dadurch gekennzeichnet, dass** die Neigung der ersten Platte (2) einstellbar ist.

**5.** Schwingsystem (1) nach einem der Ansprüche 3 oder 4, **dadurch gekennzeichnet, dass** der Versatz der zweiten Achse (34) zur Drehachse (10) einstellbar ist.

**6.** Schwingsystem (1) nach einem der vorhergehenden Ansprüche, **dadurch gekennzeichnet, dass** die Anzahl der Schwingungen pro Umdrehung einstellbar ist.

**7.** Schwingsystem (1) nach dem vorhergehenden Anspruch, **dadurch gekennzeichnet, dass** die Platten (2, 3) von verschiedenen Motoren angetrieben werden.

**8.** Schwingsystem (1) nach einem der Ansprüche 6 oder 7, **dadurch gekennzeichnet, dass** die Platten (2, 3) von einem Getriebe angetrieben werden.

**Claims**

**1.** An oscillating system (1) comprising a spindle (4), at least one drive motor to drive the spindle (4) according to an axis of rotation (10), a first plate (2) and a second plate (3), said first plate (2) cooperating with the second plate (3), the first plate (2) being inclined relative to the axis of rotation (10), and at least one of the two plates (2, 3) being driven by the drive motor, **characterized in that** the second plate (3) is ball-jointed on a second axis (34) which is offset relative to the axis of rotation (10), thus creating an amplitude of oscillations in the spindle (4), and **in that** the two plates (2, 3) rotate at different speeds.

2. The oscillating system (1) as claimed in claim, 1, **characterized in that** the two plates (2, 3) are in contact by means of balls (33).

3. The oscillating system (1) as claimed in one of the preceding claims, **characterized in that** the amplitude of the oscillations can be regulated.

4. The oscillating system (1) as claimed in the preceding claim, **characterized in that** the inclination of the first plate (2) can be regulated.

5. The oscillating system (1) as claimed in one of claims 3 or 4, **characterized in that** the offsetting of the second axis (34) relative to the axis of rotation (10) can be regulated.

6. The oscillating system (1) as claimed in one of the preceding claims, **characterized in that** the number of oscillations per rotation can be regulated.

7. The oscillating system (1) as claimed in the preceding claim, **characterized in that** the plates (2, 3) are driven by different motors.

8. The oscillating system (1) as claimed in claims 6 or 7, **characterized in that** the plates (2, 3) are driven by a gear train.

33

2

31

3

30

32    34

20

Δ

10    4

11

α

35

310

**Fig. 1**

11

4

**Fig. 2**

Fig. 3

## RÉFÉRENCES CITÉES DANS LA DESCRIPTION

**Documents brevets cités dans la description**

- FR 2907695
- DE 102005002462
- FR 2902848
- WO 2011061678 A
- FR 2881366
- WO 2014125182 A
- US 2458929 A